# EUROPEAN PATENT SPECIFICATION

(11) **EP 4 080 023 B1**
(45) Date of publication and mention of the grant of the patent: **11.10.2023**
(21) Application number: 22169549.7
(22) Date of filing: 22.04.2022
(51) Int. Cl.: F01N 3/10

(54) **STRADDLED VEHICLE**
GRÄTSCHSITZFAHRZEUG
VÉHICULE À ENFOURCHER

(30) Priority: 23.04.2021 JP 2021073041
(43) Date of publication of application: 26.10.2022
(73) Proprietor: Yamaha Hatsudoki Kabushiki Kaisha, Iwata-shi, Shizuoka-ken 438-8501 (JP)
(72) Inventor: Sugimoto, Kei, Shizuoka, 438-8501 (JP)
(74) Representative: Grünecker Patent- und Rechtsanwälte PartG mbB

(56) References cited:
- EP-B1- 3 561 245
- US-A- 5 197 282
- US-A1- 2019 301 341
- US-B2- 8 393 433

## Description

The present invention relates to a straddled vehicle having an internal combustion engine.

Prior art document US 8 393 433 B2 discloses a straddled vehicle with a body frame and an internal combustion engine including a crank case, a cylinder body connected to the crank case, and a cylinder head connected to the cylinder body. The vehicle is provided with an exhaust pipe including a connecting portion connected to the cylinder head, a front portion located forward relative to the cylinder head in a vehicle front-rear direction, a side portion located sideward of the cylinder head in a vehicle width direction, and a rear portion located rearward relative to the cylinder head in the vehicle front-rear direction. A catalyst is arranged inside the side portion of the exhaust pipe. The vehicle is provided with a bracket including a fixed portion that is fixed to the side portion of the exhaust pipe, wherein the exhaust pipe is fixed to the body frame through the bracket.

A straddled vehicle has been known in the art, in which a catalyst is arranged in an exhaust pipe upstream of a silencer in order to improve the exhaust gas cleaning property. For example, JP 2006-9648 A discloses a motorcycle, which is an example of such a straddled vehicle.

The motorcycle includes an internal combustion engine having a cylinder head, an exhaust pipe connected to the cylinder head, and a silencer connected to the exhaust pipe. An upstream end portion of the exhaust pipe is connected to the cylinder head and is supported on the cylinder head. A downstream end portion of the exhaust pipe is connected to the silencer and supported on the silencer. At least a portion of the catalyst arranged inside the exhaust pipe is arranged forward relative to the rear end of the cylinder head.

Now, the catalyst is a relatively heavy component. When the catalyst is arranged between the upstream end portion and the downstream end portion of the exhaust pipe, a high stress may occur on the exhaust pipe.

One may consider reducing the stress on the exhaust pipe by increasing the thickness of the exhaust pipe. However, if the thickness is increased, the weight of the exhaust pipe increases. As the weight increases, there is a need to more strongly support the upstream end portion and the downstream end portion of the exhaust pipe. However, an attempt to more strongly support the upstream end portion and the downstream end portion of the exhaust pipe may lead to a further increase in the weight of the exhaust pipe.

One may consider directly supporting, on the vehicle body frame, a portion of the exhaust pipe where the catalyst is arranged or the vicinity thereof. However, this portion may resonate with the vehicle body frame, thereby vibrating the exhaust pipe. An attempt to increase the strength of the suspension component in order to suppress the vibration may lead to an increase in weight.

It is an object of the present invention to provide a straddled vehicle, in which a catalyst is arranged in a relatively upstream portion of an exhaust pipe, wherein the exhaust pipe can be stably supported while suppressing an increase in weight. According to the present invention said object is solved by straddled vehicle having the features of independent claim 1. Preferred embodiments are laid down in the dependent claims.

A straddled vehicle disclosed herein includes an internal combustion engine, an exhaust pipe, a catalyst and a bracket. The internal combustion engine includes a crank case, a cylinder body connected to the crank case, and a cylinder head connected to the cylinder body. The exhaust pipe includes a connecting portion connected to the cylinder head, a front portion located forward relative to the cylinder head, a side portion located sideward of the cylinder head, and a rear portion located rearward relative to the cylinder head. The catalyst is arranged inside the side portion or the front portion of the exhaust pipe. The bracket includes a fixed portion that is fixed to the side portion or the front portion of the exhaust pipe. A front end of the fixed portion of the bracket is located forward relative to a rear end of the catalyst. A rear end of the fixed portion of the bracket is located rearward relative to a front end of the catalyst. The bracket is supported directly on the internal combustion engine.

With the straddled vehicle described above, the fixed portion of the bracket and at least a portion of the catalyst are at the same position for the vehicle front-rear direction. Therefore, a portion of the exhaust pipe where the catalyst is arranged or the vicinity thereof can be supported on the internal combustion engine with the bracket therebetween. There is no need to increase the thickness of the exhaust pipe, etc. Therefore, a portion of the exhaust pipe where the catalyst is arranged can be supported stably while suppressing an increase in weight.

There is no particular limitation on the structure for supporting the bracket directly on the internal combustion engine. For example, a first hole may be formed in the internal combustion engine, and a second hole may be formed in the bracket. The straddled vehicle may include a bolt inserted through the first hole and the second hole to fix the bracket to the internal combustion engine.

The first hole may be formed in the cylinder head.

Thus, a portion of the exhaust pipe where the catalyst is arranged or the vicinity thereof is supported on the cylinder head with the bracket therebetween.

The first hole may have an opening facing sideward. The bracket may include a vertical plate portion extending upward. The second hole may be formed in the vertical plate portion and have an opening facing sideward.

Thus, a portion of the exhaust pipe where the catalyst is arranged can be supported stably.

The vertical plate portion may be arranged inward in a vehicle width direction relative to a center line of the side portion of the exhaust pipe.

Thus, a portion of the exhaust pipe where the catalyst is arranged can be supported stably.

The vertical plate portion may be arranged upward relative to a center line of the side portion of the exhaust pipe.

Thus, a portion of the exhaust pipe where the catalyst is arranged can be supported stably.

The bracket may include an overlap portion that overlaps with the cylinder head as the vehicle is viewed from the side.

Thus, with the bracket arranged in the vicinity of the cylinder head, a portion of the exhaust pipe where the catalyst is arranged can be supported stably.

The catalyst may include an overlap portion that overlaps with the cylinder body as the vehicle is viewed from the side.

Thus, when a portion of the exhaust pipe where the catalyst is arranged is arranged in the vicinity of the cylinder body, this portion can be supported stably.

At least a portion of the side portion of the exhaust pipe may be located inward in a vehicle width direction relative to an outer end in the vehicle width direction of the crank case.

Thus, with at least a portion of the side portion of the exhaust pipe arranged in the vicinity of the internal combustion engine, a portion of the exhaust pipe where the catalyst is arranged or the vicinity thereof can be easily supported on the internal combustion engine with the bracket therebetween.

The straddled vehicle may include: a first oxygen concentration sensor attached to the exhaust pipe and arranged forward relative to the catalyst; and a second oxygen concentration sensor attached to the exhaust pipe and arranged rearward relative to the catalyst. The first oxygen concentration sensor may be arranged forward relative to a rear end of the cylinder head. The fixed portion of the bracket may be arranged rearward relative to the first oxygen concentration sensor and forward relative to the second oxygen concentration sensor.

Thus, a portion of the exhaust pipe where the catalyst, the first oxygen concentration sensor and the second oxygen concentration sensor are arranged can be supported stably.

The exhaust pipe may include a first pipe formed with an outlet port, and a second pipe formed with an inlet port connected to the outlet port. An inner diameter of the second pipe may be greater than an inner diameter of the first pipe. The first oxygen concentration sensor may be attached to the second pipe.

Thus, the exhaust gas flowing inside the exhaust pipe expands when moving from the first pipe into the second pipe. When the exhaust gas moves from the first pipe into the second pipe, the flow velocity of the exhaust gas decreases. When moisture is accumulated inside the first pipe, the adhesion of moisture to the first oxygen concentration sensor can be suppressed.

The straddled vehicle may include: a vehicle body frame supporting the internal combustion engine; an ignition plug inserted into the cylinder head and arranged rearward of the first oxygen concentration sensor and forward of the second oxygen concentration sensor; a first wire harness connected to the first oxygen concentration sensor; a second wire harness connected to the second oxygen concentration sensor; a third wire harness connected to the ignition plug; and a main harness arranged along the vehicle body frame. At least two of the first wire harness, the second wire harness and the third wire harness may be bundled together to form a harness bundle. The harness bundle may be connected to the main harness.

Thus, the wiring of the first to third wire harnesses is easier.

The harness bundle may include the second wire harness and the third wire harness.

### Advantageous Effects Of Invention

According to the present invention, it is possible to provide a straddled vehicle, in which a catalyst is arranged in a relatively upstream portion of an exhaust pipe, wherein the exhaust pipe can be stably supported while suppressing an increase in weight.

### BRIEF DESCRIPTION OF THE DRAWINGS

FIG. 1 is a right side view of a motorcycle according to one embodiment.
FIG. 2 is a right side view of an internal combustion engine and an exhaust pipe.
FIG. 3 is a plan view of the internal combustion engine and the exhaust pipe.
FIG. 4 is a front view of the internal combustion engine and the exhaust pipe.
FIG. 5 is a partial enlarged perspective view of the internal combustion engine and the exhaust pipe.
FIG. 6 is a partial enlarged side view of the internal combustion engine and the exhaust pipe, wherein a bracket and a bolt are not shown.
FIG. 7 is a partial enlarged side view of the internal combustion engine and the exhaust pipe, wherein a part of the bolt is not shown.
FIG. 8 is a partial enlarged side view of the internal combustion engine and the exhaust pipe.
FIG. 9 is a partial cross-sectional view of the exhaust pipe.

### DETAILED DESCRIPTION OF THE PREFERRED EMBODIMENTS

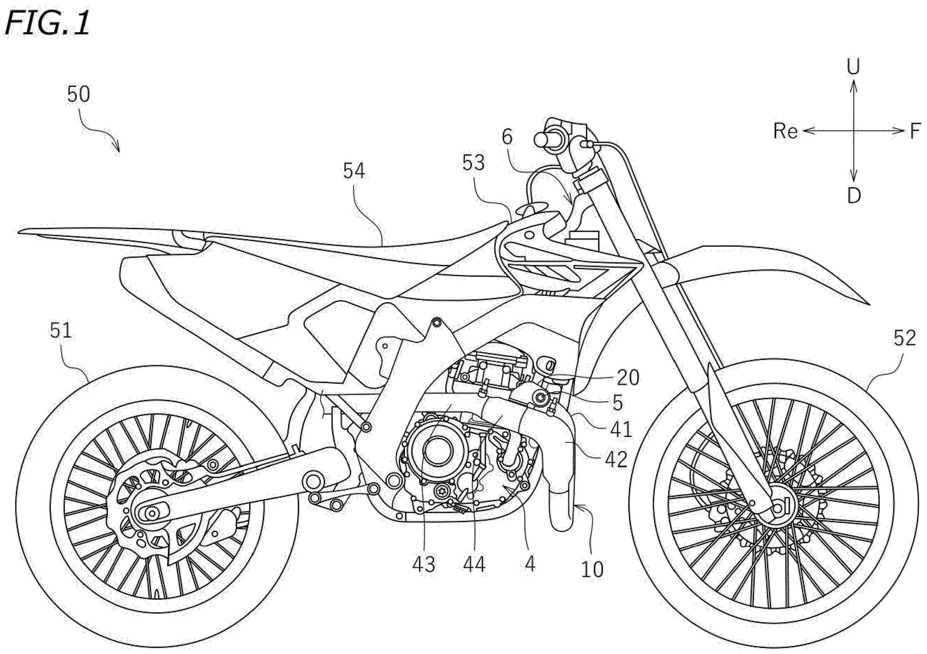

An embodiment will now be described with reference to the drawings. FIG. 1 is a right side view of a motorcycle 50, which is an example of a straddled vehicle. The motorcycle 50 includes a vehicle body frame 6, an internal combustion engine (hereinafter referred to as an engine) 4 supported on the vehicle body frame 6, a rear wheel 51 driven by the engine 4, a front wheel 52, a fuel tank 53, and a seat 54 in which the rider sits.

The terms front, rear, left, right, up and down, as used in the description below, refer to these directions as viewed from a virtual rider seated on a seat 54 while the motorcycle 50 is standing upright on a horizontal surface with no rider and no load thereon, unless specified otherwise. The designations F, Re, L, R, U and D, as used in the figures, refer to front, rear, left, right, up and down, respectively. Accordingly, it is referred to the vehicle front-rear direction F-Re, the left-right direction L-R (vehicle width direction L-R), and the vehicle up-down direction U-D. The term "forward" refers not only to the direction that extends in the front direction along the vehicle center line, as the vehicle is viewed from above, but also to directions that are inclined from that direction by an angle that is less than 90 degrees in the left-right direction. Similarly, the term "rearward" refers not only to the direction that extends rearward along the vehicle center line, as the vehicle is viewed from above, but also to directions that are inclined from that direction by an angle that is less than 90 degrees in the left-right direction. The term "leftward" refers not only to the direction that extends leftward vertical to the vehicle center line, as the vehicle is viewed from above, but also to directions that are inclined from that direction by an angle that is less than 90 degrees in the front-rear direction. The term "rightward" refers not only to the direction that extends rightward vertical to the vehicle center line, as the vehicle is viewed from above, but also to directions that are inclined from that direction by an angle that is less than 90 degrees in the front-rear direction. The term "upward" refers not only to the vertically upward direction, as the vehicle is viewed from the side, but also to directions that are inclined from that direction by an angle that is less than 90 degrees in the front-rear direction. The term "downward" refers not only to the vertically downward direction, as the vehicle is viewed from the side, but also to directions that are inclined from that direction by an angle that is less than 90 degrees in the front-rear direction.

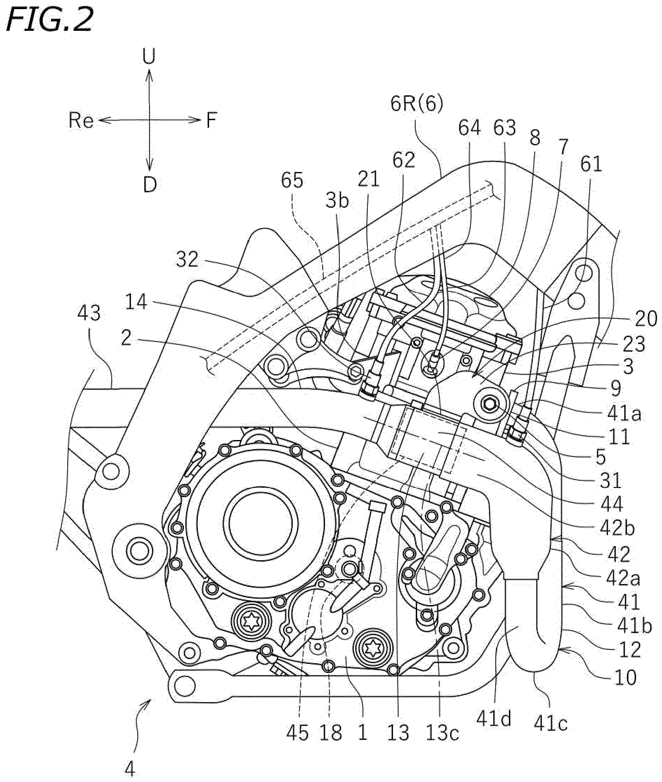

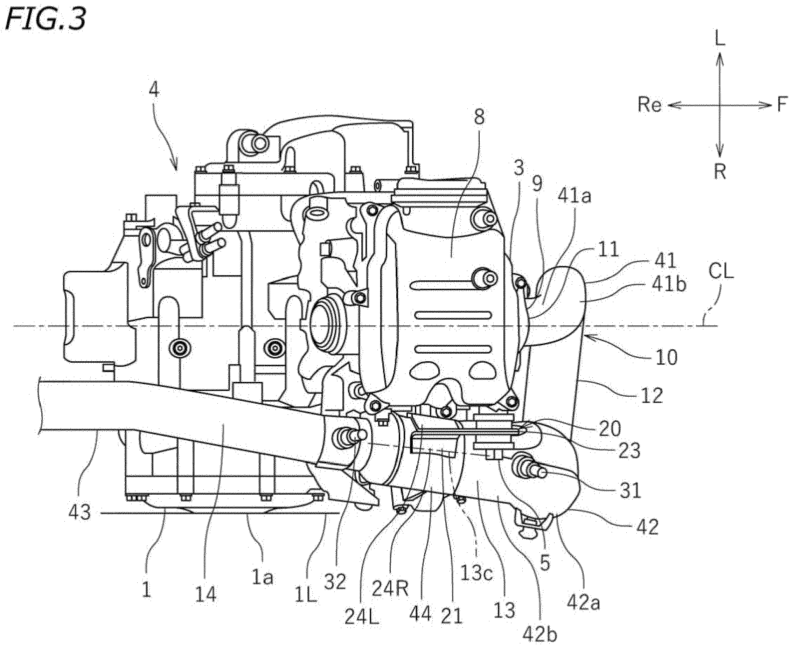

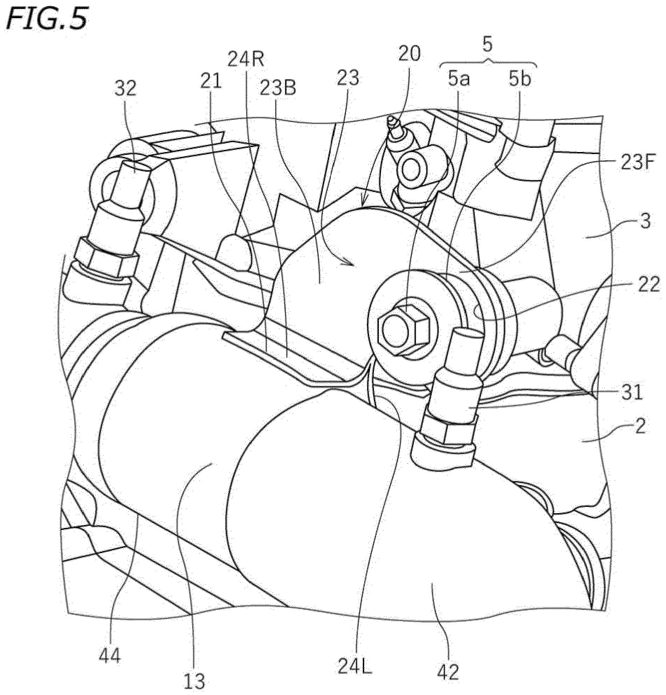

FIG. 2 is a right side view of the engine 4 and an exhaust pipe 10 to be described later. FIG. 3 is a plan view of the engine 4 and the exhaust pipe 10. FIG. 5 is a front view of the engine 4 and the exhaust pipe 10. As shown in FIG. 2, the engine 4 includes a crank case 1 that rotatably supports a crank shaft 18, a cylinder body 2 connected to the crank case 1, a cylinder head 3 connected to the cylinder body 2, and a cylinder head cover 8 connected to the cylinder head 3. The cylinder body 2 and the cylinder head 3 extend upward. Here, the engine 4 is a single-cylinder internal combustion engine. Although not shown in the figures, a single cylinder is provided inside the cylinder body 2. The cylinder head 3 is formed with a discharge port 9 for discharging exhaust gas. The discharge port 9 has an opening facing forward.

The motorcycle 50 includes an intake pipe (not shown) connected to the engine 4 and the exhaust pipe 10 connected to the engine 4. Exhaust gas to be discharged from the engine 4 flows through the exhaust pipe 10. The exhaust pipe 10 is connected to the discharge port 9.

The exhaust pipe 10 includes a plurality of components. Here, the exhaust pipe 10 includes a first pipe 41, a second pipe 42, a catalyst case 44 and a third pipe 43. Hereinafter, the side from which exhaust gas flows is referred to as the upstream side and the side toward which exhaust gas flows as the downstream side. The first pipe 41, the second pipe 42, the catalyst case 44 and the third pipe 43 are arranged in this order from the upstream side to the downstream side. The first pipe 41 is connected to the discharge port 9 of the cylinder head 3. The second pipe 42 is connected to the first pipe 41. The catalyst case 44 is connected to the second pipe 42. The third pipe 43 is connected to the catalyst case 44.

The first pipe 41 includes a portion 41a extending forward from the discharge port 9 of the cylinder head 3, a portion 41b extending downward from the portion 41a, a portion 41c extending rightward from the portion 41b, and a portion 41d extending upward from the portion 41c. The second pipe 42 includes a portion 42a extending upward and a portion 42b extending rearward from the portion 42a. The catalyst case 44 extends rearward. The third pipe 43 includes a portion that extends rearward from the catalyst case 44.

The exhaust pipe 10 can be divided into the following portions based on their positions relative to the cylinder head 3. The exhaust pipe 10 includes a connecting portion 11 connected to the cylinder head 3, a front portion 12 located forward relative to the cylinder head 3, a side portion 13 located sideward of the cylinder head 3, and a rear portion 14 located rearward relative to the cylinder head 3. As shown in FIG. 3, the side portion 13 is located rightward of the cylinder head 3. A straight line 1L of FIG. 3 is a straight line that passes through an outer end 1a in the vehicle width direction of the crank case 1 and extends in the vehicle front-rear direction. As shown in FIG. 3, at least a portion of the side portion 13 is located inward in the vehicle width direction relative to the outer end 1a in the vehicle width direction of the crank case 1. Here, the entirety of the side portion 13 is located inward in the vehicle width direction relative to the outer end 1a of the crank case 1. Note that inward in the vehicle width direction refers to the direction toward the vehicle center line CL. Outward in the vehicle width direction refers to the direction away from the vehicle center line CL.

The connecting portion 11 is formed by a part of the first pipe 41. The front portion 12 is formed by a part of the first pipe 41 and a part of the second pipe 42. The side portion 13 is formed by a part of the second pipe 42, the catalyst case 44 and a part of the third pipe 43. Note however that the relationship between the portions of the exhaust pipe 10 and the components as illustrated herein is merely an example. There is no particular limitation on the relationship between the portions of the exhaust pipe 10 and the components.

As shown in FIG. 2, a catalyst 45 is arranged inside the catalyst case 44. The catalyst case 44 is formed in a tubular shape. The catalyst 45 is formed in a cylindrical shape. Note however that there is no particular limitation on the shape of the catalyst case 44 and the catalyst 45. In the present embodiment, the catalyst case 44 forms a part of the side portion 13 of the exhaust pipe 10. The entirety of the catalyst 45 is arranged inside the side portion 13. Note however that a part of the catalyst 45 may be arranged inside the front portion 12, and another part of the catalyst 45 may be arranged inside the side portion 13. The entirety of the catalyst 45 may be arranged inside the front portion 12.

A portion of the exhaust pipe 10 where the catalyst 45 is arranged is to be a relatively heavy portion. In the present embodiment, the catalyst case 44 is supported on the engine 4. Specifically, the catalyst case 44 is supported on the engine 4 with a bracket 20 therebetween.

As shown in FIG. 3 and FIG. 5, the bracket 20 includes a vertical plate portion 23 extending upward, a horizontal plate portion 24R extending rightward from the lower end of the vertical plate portion 23, and a horizontal plate portion 24L extending leftward from the lower end of the vertical plate portion 23. The horizontal plate portion 24R and the horizontal plate portion 24L are fixed to the catalyst case 44. Although there is no particular limitation on the fixing method, the horizontal plate portion 24R and the horizontal plate portion 24L are fixed by welding to the catalyst case 44, for example. The horizontal plate portion 24R and the horizontal plate portion 24L together form a fixed portion 21 of the bracket 20 to the exhaust pipe 10.

In FIG. 3, a straight line 13c represents the center line of the side portion 13 of the exhaust pipe 10. The vertical plate portion 23 is arranged inward in the vehicle width direction relative to the center line 13c of the side portion 13. As shown in FIG. 2, the vertical plate portion 23 is arranged upward relative to the center line 13c of the side portion 13. As shown in FIG. 5, the vertical plate portion 23 includes a front portion 23F and a rear portion 23B. The rear portion 23B is connected to the horizontal plate portion 24R and the horizontal plate portion 24L. The front portion 23F is located forward of the rear portion 23B. The front portion 23F is located forward relative to the fixed portion 21.

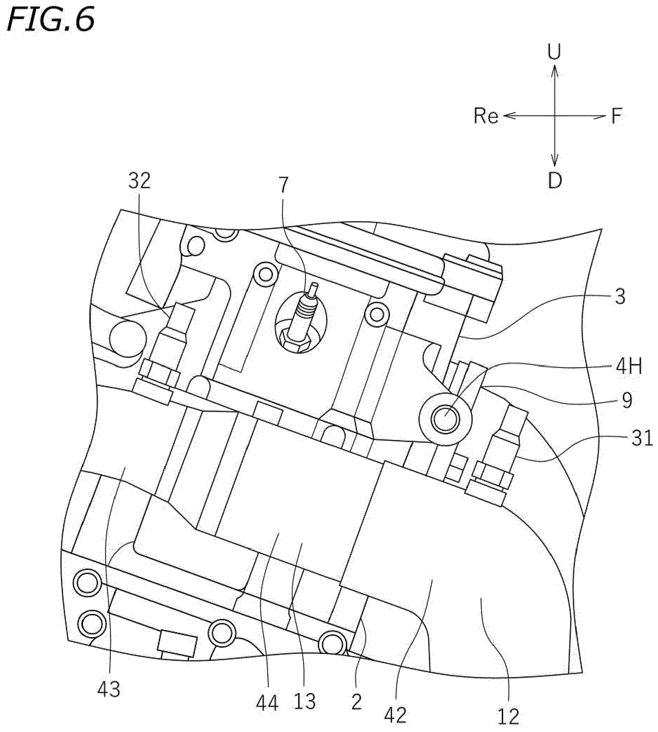

FIG. 6 is a partial enlarged side view of the engine 4 and the exhaust pipe 10. FIG. 6 does not show the bracket 20 and a bolt 5 to be described later. As shown in FIG. 6, a first hole 4H is formed in the engine 4. Here, the first hole 4H is formed in the cylinder head 3. The first hole 4H has an opening facing sideward. The first hole 4H has an opening facing rightward.

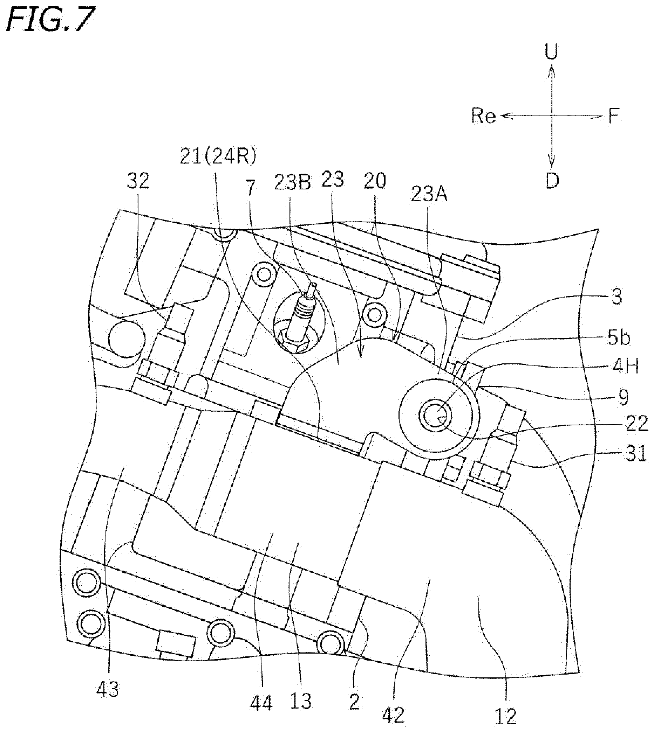

As shown in FIG. 7, a second hole 22 is formed in the bracket 20. The second hole 22 is formed in the vertical plate portion 23 of the bracket 20. The second hole 22 is formed in the front portion 23F of the vertical plate portion 23. The second hole 22 has an opening facing sideward. The second hole 22 is a through hole and has an opening facing leftward and an opening facing rightward.

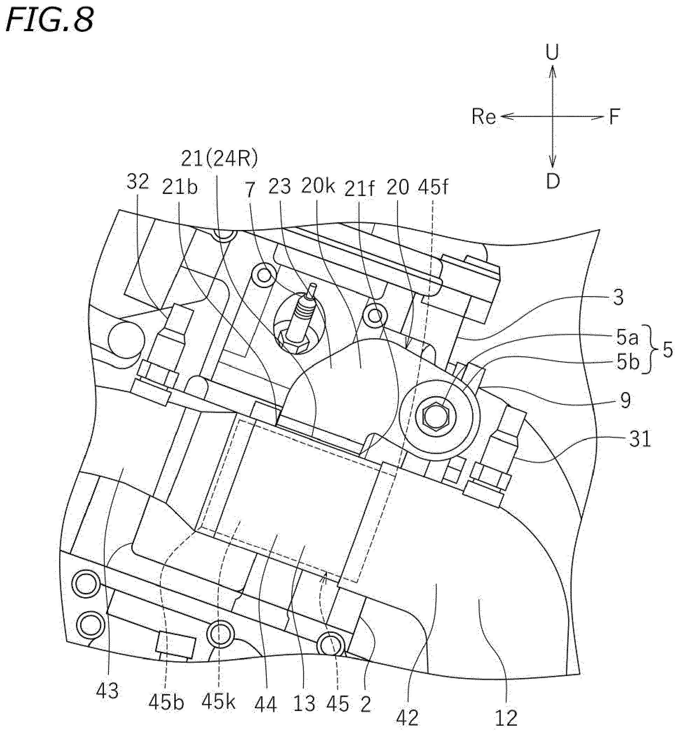

As shown in FIG. 8, a bolt 5 is inserted through the first hole 4H of the engine 4 and the second hole 22 of the bracket 20. The bracket 20 is supported directly on the engine 4 by the bolt 5. Here, being supported directly on the engine 4 means being supported on the engine 4 without the vehicle body frame 6 therebetween. The bracket 20 may be supported on the engine 4 with no other members therebetween. In the present embodiment, a bolt 5 is a so-called rubber-mount bolt. As shown in FIG. 5, a bolt 5 includes a shaft 5a and a rubber 5b fitted around the shaft 5a. The rubber 5b being present between the bracket 20 and the engine 4 is encompassed by the bracket 20 being supported directly on the engine 4.

As shown in FIG. 8, the bracket 20 supports a portion of the exhaust pipe 10 where the catalyst 45 is arranged. For the front-rear direction, the fixed portion 21 of the bracket 20 and at least a portion of the catalyst 45 are at the same position. A front end 21f of the fixed portion 21 of the bracket 20 is located forward relative to a rear end 45b of the catalyst 45. A rear end 21b of the fixed portion 21 of the bracket 20 is located rearward relative to a front end 45f of the catalyst 45. A portion of the exhaust pipe 10 where the catalyst 45 is arranged is supported directly on the engine 4 with the bracket 20 therebetween.

As shown in FIG. 2, at least a portion of the bracket 20 overlaps with the cylinder head 3 as the vehicle is viewed from the side. The bracket 20 includes an overlap portion 20k that overlaps with the cylinder head 3 as the vehicle is viewed from the side (see FIG. 8).

At least a portion of the catalyst 45 overlaps with the cylinder body 2 as the vehicle is viewed from the side. The catalyst 45 includes an overlap portion 45k that overlaps with the cylinder body 2 as the vehicle is viewed from the side (see FIG. 8).

As shown in FIG. 2, the motorcycle 50 includes a first oxygen concentration sensor 31 and a second oxygen concentration sensor 32 attached to the exhaust pipe 10. The first oxygen concentration sensor 31 is arranged forward relative to the catalyst 45. The second oxygen concentration sensor 32 is arranged rearward relative to the catalyst 45. The first oxygen concentration sensor 31 is arranged upstream of the catalyst 45, and the second oxygen concentration sensor 32 is arranged downstream of the catalyst 45. The first oxygen concentration sensor 31 detects the oxygen concentration of the exhaust gas before being cleaned by the catalyst 45. The second oxygen concentration sensor 32 detects the oxygen concentration of the exhaust gas after being cleaned by the catalyst 45. The first oxygen concentration sensor 31 is attached to the second pipe 42. The second oxygen concentration sensor 32 is attached to the third pipe 43.

The first oxygen concentration sensor 31 is arranged relatively forward. The first oxygen concentration sensor 31 is arranged forward relative to a rear end 3b of the cylinder head 3. The fixed portion 21 of the bracket 20 is arranged rearward relative to the first oxygen concentration sensor 31 and forward relative to the second oxygen concentration sensor 32. The bracket 20 supports a portion of the exhaust pipe 10 that is between the first oxygen concentration sensor 31 and the second oxygen concentration sensor 32.

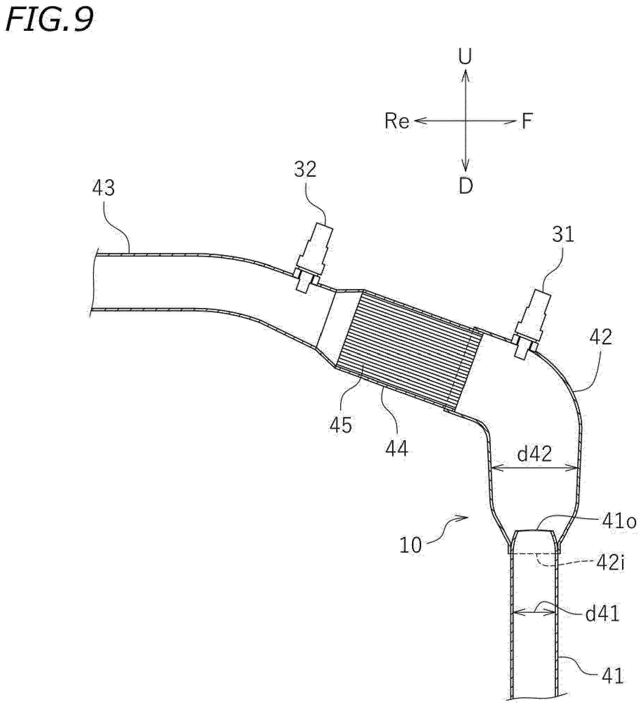

As shown in FIG. 9, the first pipe 41 includes an outlet port 41o. The outlet port 41o has an opening facing upward. The second pipe 42 includes an inlet port 42i. The inlet port 42i has an opening facing downward. The inlet port 42i of the second pipe 42 is connected to the outlet port 41o of the first pipe 41. An inner diameter d42 of the second pipe 42 is greater than an inner diameter d41 of the first pipe 41. The second pipe 42 is formed so as to expand the exhaust gas flowing from the first pipe 41. The second pipe 42 is formed so as to decrease the flow velocity of the exhaust gas flowing from the first pipe 41. Note that when the inner diameter of the first pipe 41 is not constant, the inner diameter d41 of the first pipe 41 refers to the average inner diameter of the first pipe 41. When the inner diameter of the second pipe 42 is not constant, the inner diameter d42 of the second pipe 42 refers to the average inner diameter of the second pipe 42.

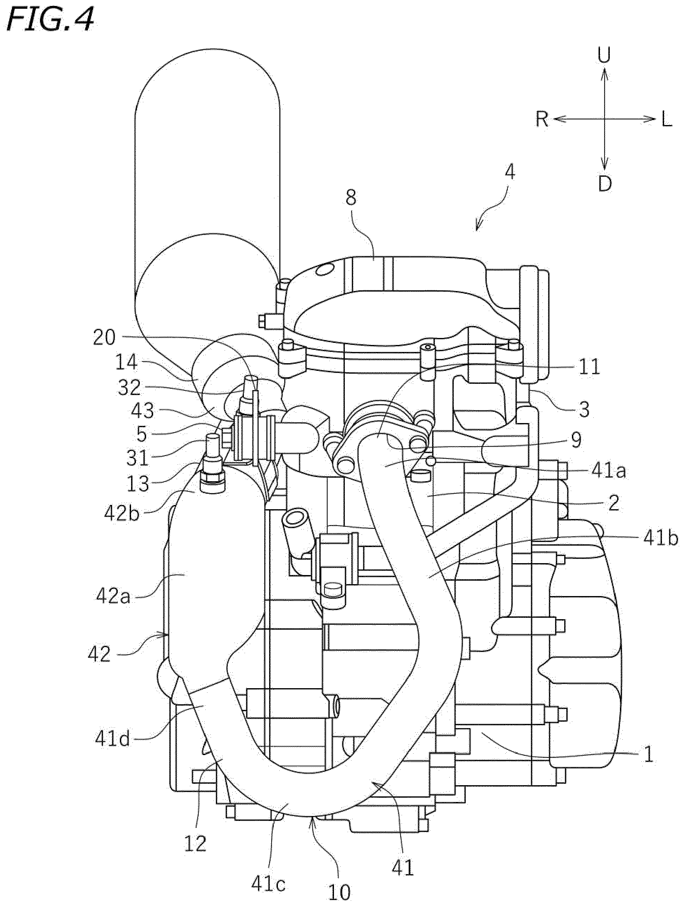

While the engine 4 is stopped, moisture in the exhaust pipe 10 may condense and accumulate in the exhaust pipe 10. In the present embodiment, the portion 41c extending rightward of the first pipe 41 is the lowest portion of the exhaust pipe 10 (see FIG. 4). Moisture may accumulate in the portion 41c. However, even if the accumulated moisture scatters downstream riding on the exhaust gas flow after the engine 4 starts, the exhaust gas expands when flowing into the second pipe 42, thereby decreasing the flow velocity of the exhaust gas. While the first oxygen concentration sensor 31 is arranged relatively forward, the adhesion of moisture to the first oxygen concentration sensor 31 is suppressed.

As shown in FIG. 2, an ignition plug 7 is inserted into the cylinder head 3. The ignition plug 7 is arranged rearward of the first oxygen concentration sensor 31 and forward of the second oxygen concentration sensor 32.

A first wire harness 61 is connected to the first oxygen concentration sensor 31. A second wire harness 62 is connected to the second oxygen concentration sensor 32. A third wire harness 63 is connected to the ignition plug 7. Note that the first wire harness 61, the second wire harness 62 and the third wire harness 63 are not shown in figures other than FIG. 2. As the vehicle is viewed from the side, the first wire harness 61 extends upward from the first oxygen concentration sensor 31, the second wire harness 62 extends upward from the second oxygen concentration sensor 32, and the third wire harness 63 extends upward from the ignition plug 7.

The second wire harness 62 and the third wire harness 63 are bundled together to form a harness bundle 64. The main harness 65 is arranged on the reverse side of a side frame 6R of the vehicle body frame 6. The main harness 65 is arranged inward in the vehicle width direction (herein, leftward) of the side frame 6R. The harness bundle 64 is connected to the main harness 65. Here, the harness bundle 64 is connected to the main harness 65 with a connector (not shown) therebetween. The first wire harness 61 is connected to the main harness 65 at a position that is forward relative to the harness bundle 64.

The motorcycle 50 is configured as described above. Next, various advantageous effects realized by the motorcycle 50 according to the present embodiment will be described.

With the motorcycle 50, the catalyst 45 is arranged inside the side portion 13 of the exhaust pipe 10. While a portion of the exhaust pipe 10 where the catalyst 45 is arranged is a relatively heavy portion, this portion is fixed to the bracket 20, and the bracket 20 is supported directly on the engine 4. The front end 21f of the fixed portion 21 of the bracket 20 is located forward relative to the rear end 45b of the catalyst 45, and the rear end 21b of the fixed portion 21 is located rearward relative to the front end 45f of the catalyst 45. Thus, the fixed portion 21 and at least a portion of the catalyst 45 are at the same position for the front-rear direction. Therefore, a portion of the exhaust pipe 10 where the catalyst 45 is arranged or the vicinity thereof is supported on the engine 4 with the bracket 20 therebetween. Therefore, with the motorcycle 50, a portion of the exhaust pipe 10 where the catalyst 45 is arranged can be supported stably. The thickness of the exhaust pipe 10 does not need to be larger than that with conventional techniques, and it is possible to suppress an increase in weight of the exhaust pipe 10. With the motorcycle 50, a portion of the exhaust pipe 10 where the catalyst 45 is arranged is not supported directly on the vehicle body frame 6. The exhaust pipe 10 is supported on the engine 4 at the connecting portion 11 connected to the cylinder head 3 and the side portion 13 fixed to the bracket 20. Portions of the exhaust pipe 10 that are supported on the engine 4 are arranged close to each other. A portion of the exhaust pipe 10 where the catalyst 45 is arranged or the vicinity thereof is unlikely to be vibrated. Since it is not particularly necessary to add components for suppressing vibrations of the exhaust pipe 10, it is possible to suppress an increase in weight. As described above, with the motorcycle 50, it is possible to stably support the exhaust pipe 10 while suppressing an increase in weight.

According to the present embodiment, the first hole 4H is formed in the engine 4, and the second hole 22 is formed in the bracket 20. A bolt 5 is inserted through the first hole 4H and the second hole 22. The bracket 20 is fixed to the engine 4 by the bolt 5. Therefore, a portion of the exhaust pipe 10 where the catalyst 45 is arranged can be stably supported on the engine 4 with the bracket 20 therebetween.

According to the present embodiment, the first hole 4H is formed in the cylinder head 3. Therefore, a portion of the exhaust pipe 10 where the catalyst 45 is arranged or the vicinity thereof is supported on the cylinder head 3 with the bracket 20 therebetween.

According to the present embodiment, the first hole 4H and the second hole 22 have openings facing sideward. The bracket 20 includes the vertical plate portion 23 extending upward, and the second hole 22 is formed in the vertical plate portion 23. Thus, a portion of the exhaust pipe 10 where the catalyst 45 is arranged can be supported stably.

As shown in FIG. 3, the vertical plate portion 23 of the bracket 20 is arranged inward in the vehicle width direction relative to the center line 13c of the side portion 13 of the exhaust pipe 10. Thus, a portion of the exhaust pipe 10 where the catalyst 45 is arranged can be supported stably.

As shown in FIG. 2, the vertical plate portion 23 of the bracket 20 is arranged upward relative to the center line 13c of the side portion 13 of the exhaust pipe 10. Thus, a portion of the exhaust pipe 10 where the catalyst 45 is arranged can be supported stably.

As shown in FIG. 8, the bracket 20 includes the overlap portion 20k that overlaps with the cylinder head 3 as the vehicle is viewed from the side. Thus, since the bracket 20 is arranged in the vicinity of the cylinder head 3, a portion of the exhaust pipe 10 where the catalyst 45 is arranged can be supported stably.

As shown in FIG. 8, the catalyst 45 includes the overlap portion 45k that overlaps with the cylinder body 2 as the vehicle is viewed from the side. Thus, since a portion of the exhaust pipe 10 where the catalyst 45 is arranged is arranged in the vicinity of the cylinder body 2, this portion can be supported stably.

As shown in FIG. 3, according to the present embodiment, at least a portion of the side portion 13 of the exhaust pipe 10 is located inward in the vehicle width direction relative to the outer end 1a in the vehicle width direction of the crank case 1. At least a portion of the side portion 13 of the exhaust pipe 10 is arranged in the vicinity of the engine 4 for the vehicle width direction. Therefore, a portion of the exhaust pipe 10 where the catalyst 45 is arranged or the vicinity thereof can be easily supported on the engine 4 with the bracket 20 therebetween.

As shown in FIG. 2, the first oxygen concentration sensor 31 and the second oxygen concentration sensor 32 are arranged, in addition to the catalyst 45, in the exhaust pipe 10. The first oxygen concentration sensor 31 is arranged forward relative to the catalyst 45, and the second oxygen concentration sensor 32 is arranged rearward relative to the catalyst 45. According to the present embodiment, the fixed portion 21 of the bracket 20 is arranged rearward relative to the first oxygen concentration sensor 31 and forward relative to the second oxygen concentration sensor 32. Therefore, it is possible to stably support a portion of the exhaust pipe 10 where the catalyst 45 is arranged, a portion thereof where the first oxygen concentration sensor 31 is arranged, and a portion thereof where the second oxygen concentration sensor 32 is arranged.

According to the present embodiment, as shown in FIG. 9, the first oxygen concentration sensor 31 is attached to the second pipe 42 of the exhaust pipe 10. The inner diameter d42 of the second pipe 42 is larger than the inner diameter d41 of the first pipe 41. The exhaust gas flowing inside the exhaust pipe 10 expands when moving from the first pipe 41 into the second pipe 42. When the exhaust gas moves from the first pipe 41 into the second pipe 42, the flow velocity of the exhaust gas decreases. When moisture is accumulated inside the first pipe 41, the adhesion of moisture to the first oxygen concentration sensor 31 can be suppressed.

According to the present embodiment, as shown in FIG. 2, the second wire harness 62 connected to the second oxygen concentration sensor 32 and the third wire harness 63 connected to the ignition plug 7 are bundled together to form the harness bundle 64. The harness bundle 64 is connected to the main harness 65. The wiring of the second wire harness 62 and the third wire harness 63 is easier as compared with the case where the second wire harness 62 and the third wire harness 63 are individually connected to the main harness 65. Moreover, when the design of the vehicle body frame 6 is changed, for example, there is no need to change the arrangement of the second wire harness 62 and the third wire harness 63, and it only requires changing the arrangement of the main harness 65 that extends along the vehicle body frame 6.

According to the present embodiment, the ignition plug 7 and the second oxygen concentration sensor 32 are arranged close to each other for the up-down direction. Therefore, it is relatively easy to bundle together the second wire harness 62 and the third wire harness 63.

In the present embodiment, the harness bundle 64 is formed of the second wire harness 62 and the third wire harness 63. However, there is no particular limitation thereto, as long as the harness bundle 64 is formed by bundling together at least two of the first wire harness 61, the second wire harness 62 and the third wire harness 63. For example, the harness bundle 64 may be formed by bundling together the first wire harness 61, the second wire harness 62 and the third wire harness 63. According to the present embodiment, the ignition plug 7, the first oxygen concentration sensor 31 and the second oxygen concentration sensor 32 are arranged close to each other for their positions in the up-down direction. Therefore, it is relatively easy to bundle together the first wire harness 61, the second wire harness 62 and the third wire harness 63.

While one embodiment has been described above, the embodiment is merely an example. Various other embodiments are possible.

In the embodiment described above, the engine 4 is a single-cylinder engine including only one cylinder. However, the engine 4 may be a multi-cylinder engine including a plurality of cylinders.

The fixed portion 21 of the bracket 20 may be fixed to a part of the side portion 13 and a part of the front portion 12 of the exhaust pipe 10. When at least a portion of the catalyst 45 is arranged inside the front portion 12 of the exhaust pipe 10, the fixed portion 21 of the bracket 20 may be fixed to the front portion 12 of the exhaust pipe 10.

The first hole 4H may be formed in a component of the engine 4 other than the cylinder head 3. The bracket 20 may be attached to a component of the engine 4 other than the cylinder head 3.

The direction of the first hole 4H and the second hole 22 is not limited to sideward. For example, the first hole 4H may have an opening facing upward, and the second hole 22 may have openings facing upward and downward.

The vertical plate portion 23 of the bracket 20 may be arranged outward in the vehicle width direction relative to the center line 13c of the side portion 13 of the exhaust pipe 10. The vertical plate portion 23 may be arranged on the center line 13c as the vehicle is viewed from above.

While the exhaust pipe 10 is supported on the bracket 20 while hanging down therefrom in the embodiment described above, the exhaust pipe 10 may be supported by the bracket 20 from below. The vertical plate portion 23 of the bracket 20 may be arranged downward relative to the center line 13c of the side portion 13 of the exhaust pipe 10.

In the embodiment above, as shown in FIG. 5, the vertical plate portion 23 of the bracket 20 includes the front portion 23F located forward relative to the fixed portion 21 and the rear portion 23B connected to the fixed portion 21. However, there is no particular limitation on the configuration of the vertical plate portion 23. The rear portion 23B of the vertical plate portion 23 may be located rearward relative to the fixed portion 21, and the front portion 23F may be connected to the fixed portion 21. In this case, the second hole 22 may be formed in the rear portion 23B.

The shape of the bracket 20 in the embodiment described above is merely an example. There is no particular limitation on the shape of the bracket 20.

The bracket 20 may not overlap with the cylinder head 3 as the vehicle is viewed from the side.

The catalyst 45 may not overlap with the cylinder body 2 as the vehicle is viewed from the side.

There is no particular limitation on the arrangement of the first oxygen concentration sensor 31 and the second oxygen concentration sensor 32. One or both of the first oxygen concentration sensor 31 and the second oxygen concentration sensor 32 may be omitted.

The inner diameter d42 of the second pipe 42 may be equal to the inner diameter d41 of the first pipe 41 or may be smaller than the inner diameter d41 of the first pipe 41.

The first wire harness 61, the second wire harness 62 and the third wire harness 63 may not be bundled together. The first wire harness 61, the second wire harness 62 and the third wire harness 63 may be individually connected to the main harness 65.

A straddled vehicle refers to a vehicle that is straddled by the rider. The straddled vehicle is not limited to the motorcycle 50. The straddled vehicle may be an auto tricycle, an ATV (All Terrain Vehicle), or a snowmobile, for example.

### Reference Signs List

1: Crank case, 2: Cylinder body, 3: Cylinder head, 3b: Rear end of cylinder head, 4: Internal combustion engine, 4H: First hole, 5: Bolt, 6: Vehicle body frame, 7: Ignition plug, 10: Exhaust pipe, 11: Connecting portion, 12: Front portion, 13: Side portion, 13c: Center line of side portion, 14: Rear portion, 20: Bracket, 20k: Overlap portion, 21: Fixed portion, 21f: Front end of fixed portion, 21b: Rear end of fixed portion, 22: Second hole, 23: Vertical plate portion, 31: First oxygen concentration sensor, 32: Second oxygen concentration sensor, 41: First pipe, 41o: Outlet port of first pipe, 42: Second pipe, 42i: Inlet port of second pipe, 45: Catalyst, 45f: Front end of catalyst, 45b: Rear end of catalyst, 45k: Overlap portion, 50: Motorcycle (straddled vehicle), 61: First wire harness, 62: Second wire harness, 63: Third wire harness, 64: Harness bundle, 65: Main harness

## Claims

1. A straddled vehicle (50) comprising:
an internal combustion engine (4) including a crank case (1), a cylinder body (2) connected to the crank case (1), and a cylinder head (3) connected to the cylinder body (2);
an exhaust pipe (10) including a connecting portion (11) connected to the cylinder head (3), a front portion (12) located forward relative to the cylinder head (3) in a vehicle front-rear direction (F-Re), a side portion (13) located sideward of the cylinder head (3) in a vehicle width direction (L-R), and a rear portion (14) located rearward relative to the cylinder head (3) in the vehicle front-rear direction (F-Re);
a catalyst (45) arranged inside the side portion (13) or the front portion (12) of the exhaust pipe (10); and
a bracket (20) including a fixed portion (21) that is fixed to the side portion (13) or the front portion (12) of the exhaust pipe (10), wherein:
a front end (21f) of the fixed portion (21) of the bracket (20) is located forward relative to a rear end (45b) of the catalyst (45) in the vehicle front-rear direction (F-Re), and a rear end (21b) of the fixed portion (21) of the bracket (20) is located rearward relative to a front end (45f) of the catalyst (45) in the vehicle front-rear direction (F-Re); and
the bracket (20) is supported directly on the internal combustion engine (4).

2. The straddled vehicle (50) according to claim 1, wherein:
a first hole (4H) is formed in the internal combustion engine (4);
a second hole (22) is formed in the bracket (20); and
the straddled vehicle (50) includes a bolt (5) inserted through the first hole (4H) and the second hole (22) to fix the bracket (20) to the internal combustion engine (4).

3. The straddled vehicle (50) according to claim 2, wherein the first hole (4H) is formed in the cylinder head (3).

4. The straddled vehicle (50) according to claim 2 or 3, wherein:
the first hole (4H) has an opening facing sideward in the vehicle width direction (L-R);
the bracket (20) includes a vertical plate portion (23) extending upward the vehicle up-down direction (U-D); and
the second hole (22) is formed in the vertical plate portion (23) and has an opening facing sideward in the vehicle width direction (L-R).

5. The straddled vehicle (50) according to claim 4, wherein the vertical plate portion (23) is arranged inward in the vehicle width direction (L-R) relative to a center line (13c) of the side portion (13) of the exhaust pipe (10).

6. The straddled vehicle (50) according to claim 4 or 5, wherein the vertical plate portion (23) is arranged upward relative to a center line (13c) of the side portion (13) of the exhaust pipe (10) the vehicle up-down direction (U-D).

7. The straddled vehicle (50) according to any one of claims 1 to 6, wherein the bracket (20) includes an overlap portion (20k) that overlaps with the cylinder head (3) as the vehicle is viewed from the side.

8. The straddled vehicle (50) according to any one of claims 1 to 7, wherein the catalyst (45) includes an overlap portion (45k) that overlaps with the cylinder body (2) as the vehicle is viewed from the side.

9. The straddled vehicle (50) according to any one of claims 1 to 8, wherein at least a portion of the side portion (13) of the exhaust pipe (10) is located inward in the vehicle width direction (L-R) relative to an outer end (1a) in the vehicle width direction (L-R) of the crank case (1).

10. The straddled vehicle (50) according to any one of claims 1 to 9, comprising:
a first oxygen concentration sensor (31) attached to the exhaust pipe (10) and arranged forward relative to the catalyst (45) in the vehicle front-rear direction (F-Re); and
a second oxygen concentration sensor (32) attached to the exhaust pipe (10) and arranged rearward relative to the catalyst (45) in the vehicle front-rear direction (F-Re), wherein:
the first oxygen concentration sensor (31) is arranged forward relative to a rear end (3b) of the cylinder head (3) in the vehicle front-rear direction (F-Re); and
the fixed portion (21) of the bracket (20) is arranged rearward relative to the first oxygen concentration sensor (31) and forward relative to the second oxygen concentration sensor (32) in the vehicle front-rear direction (F-Re).

11. The straddled vehicle (50) according to claim 10, wherein:
the exhaust pipe (10) includes a first pipe (41) formed with an outlet port (41o), and a second pipe (42) formed with an inlet port (42i) connected to the outlet port (41o);
an inner diameter (d42) of the second pipe (42) is greater than an inner diameter (d41) of the first pipe (41); and
the first oxygen concentration sensor (31) is attached to the second pipe (42).

12. The straddled vehicle (50) according to claim 10 or 11, comprising:
a vehicle body frame (6) supporting the internal combustion engine (4);
an ignition plug (7) inserted into the cylinder head (3) and arranged rearward of the first oxygen concentration sensor (31) and forward of the second oxygen concentration sensor (32) in the vehicle front-rear direction (F-Re);
a first wire harness (61) connected to the first oxygen concentration sensor (31);
a second wire harness (62) connected to the second oxygen concentration sensor (32);
a third wire harness (63) connected to the ignition plug (7); and
a main harness (65) arranged along the vehicle body frame (6) in the vehicle front-rear direction (F-Re), wherein:
at least two of the first wire harness (61), the second wire harness (62) and the third wire harness (63) are bundled together to form a harness bundle (64); and
the harness bundle (64) is connected to the main harness (65).

13. The straddled vehicle (50) according to claim 12, wherein the harness bundle (64) includes the second wire harness (42) and the third wire harness (43).

## Patentansprüche

1. Ein Spreiz-Sitz-Fahrzeug (50), das umfasst:
einen Verbrennungsmotor (4), der ein Kurbelgehäuse (1), einen Zylinderkörper (2), der mit dem Kurbelgehäuse (1) verbunden ist, und einen Zylinderkopf (3), der mit dem Zylinderkörper (2) verbunden ist, enthält;
eine Abgasleitung (10), die einen Verbindungsabschnitt (11), der mit dem Zylinderkopf (3) verbunden ist, einen Frontabschnitt (12), der vorne, relativ zum Zylinderkopf (3) in einer Fahrzeug-Vorder-Rück-Richtung (F-Re), angeordnet ist, einen Seitenabschnitt (13), der seitlich vom Zylinderkopf (3) in einer Fahrzeug-Breiten-Richtung (L-R) angeordnet ist, und einen Rückabschnitt (14), der hinten, relativ zum Zylinderkopf (3) in der Fahrzeug-Vorder-Rück-Richtung (F-Re) angeordnet ist, enthält;
einen Katalysator (45), der innerhalb des Seitenabschnitts (13) oder des Frontabschnitts (12) der Abgasleitung (10) angeordnet ist; und
eine Halterung (20), die fixierten Abschnitt (21) enthält, der an dem Seitenabschnitt (13) oder dem Frontabschnitt (12) der Abgasleitung (10) fixiert ist, wobei:
ein vorderes Ende (21f) des fixierten Abschnitts (21) der Halterung (20) vorne relativ zu einem hinteren Ende (45b) des Katalysators (45) in der Fahrzeug-Vorder-Rück-Richtung (F-Re) angeordnet ist, und ein hinteres Ende (21b) des fixierten Abschnitts (21) der Halterung (20) hinten relativ zu einem vorderen Ende (45f) des Katalysators (45) in der Fahrzeug-Vorder-Rück-Richtung (F-Re) angeordnet ist; und
die Halterung (20) ist direkt an dem Verbrennungsmotor (4) gelagert.

2. Das Spreiz-Sitz-Fahrzeug (50) gemäß Anspruch 1, wobei:
ein erstes Loch (4H) in dem Verbrennungsmotor (4) ausgebildet ist;
ein zweites Loch (22) in der Halterung (20) ausgebildet ist; und
das Spreiz-Sitz-Fahrzeug (50) einen Bolzen (5) enthält, der durch das erste Loch (4H) und das zweite Loch (22) eingesetzt ist, um die Halterung (20) an dem Verbrennungsmotor (4) zu fixieren.

3. Das Spreiz-Sitz-Fahrzeug (50) gemäß Anspruch 2, wobei das erste Loch (4H) in dem Zylinderkopf (3) ausgebildet ist.

4. Das Spreiz-Sitz-Fahrzeug (50) gemäß Anspruch 2 oder 3, wobei:
das erste Loch (4H) eine Öffnung hat, die seitwärts in Fahrzeug-Breiten-Richtung (L-R) gewandt ist;
die Halterung (20) einen vertikalen Plattenabschnitt (23) enthält, der sich in der Fahrzeug-Auf-Ab-Richtung (U-D) nach oben erstreckt; und
das zweite Loch (22) in dem vertikalen Plattenteil (23) ausgebildet ist und eine Öffnung hat, die seitwärts in Fahrzeug-Breiten-Richtung (L-R) gewandt ist.

5. Das Spreiz-Sitz-Fahrzeug (50) gemäß Anspruch 4, wobei der vertikale Plattenabschnitt (23) innen in der Fahrzeug-Breiten-Richtung (L-R) relativ zu einer Mittellinie (13c) des Seitenabschnitts (13) der Abgasleitung (10) angeordnet ist.

6. Das Spreiz-Sitz-Fahrzeug (50) gemäß Anspruch 4 oder 5, wobei der vertikale Plattenabschnitt (23) oben in der Fahrzeug-Auf-Ab-Richtung (U-D) relativ zu einer Mittellinie (13c) des Seitenabschnitts (13) der Abgasleitung (10) angeordnet ist.

7. Das Spreiz-Sitz-Fahrzeug (50) gemäß irgendeinem der Ansprüche 1 bis 6, wobei die Halterung (20) einen Überlappungsabschnitt (20k) enthält, der sich mit dem Zylinderkopf (3) überlappt, wenn das Fahrzeug von der Seite betrachtet wird.

8. Das Spreiz-Sitz-Fahrzeug (50) gemäß irgendeinem der Ansprüche 1 bis 7, wobei der Katalysator (45) einen Überlappungsabschnitt (45k) enthält, der sich mit dem Zylinderkörper (2) überlappt, wenn das Fahrzeug von der Seite betrachtet wird.

9. Das Spreiz-Sitz-Fahrzeug (50) gemäß irgendeinem der Ansprüche 1 bis 8, wobei zumindest ein Abschnitt des Seitenabschnitts (13) der Abgasleitung (10) innen in der Fahrzeug-Breiten-Richtung (L-R) relativ zu einem äußeren Ende (1a) in der Fahrzeug-Breiten-Richtung (L-R) des Kurbelgehäuses (1) angeordnet ist.

10. Das Spreiz-Sitz-Fahrzeug (50) gemäß irgendeinem der Ansprüche 1 bis 9, das umfasst:
einen ersten Sauerstoffkonzentrationssensor (31), der an der Abgasleitung (10) angebracht und vorne relativ zum Katalysator (45) in der Fahrzeug-Vorder-Rück-Richtung (F-Re) angeordnet ist; und
einen zweiten Sauerstoffkonzentrationssensor (32), der an der Abgasleitung (10) angebracht und hinten relativ zu dem Katalysator (45) in der Fahrzeug-Vorder-Rück-Richtung (F-Re) angeordnet ist, wobei:
der erste Sauerstoffkonzentrationssensor (31) vorne relativ zu einem hinteren Ende (3b) des Zylinderkopfs (3) in der Fahrzeug-Vorder-Rück-Richtung (F-Re) angeordnet ist; und
der fixierte Abschnitt (21) der Halterung (20) hinten relativ zu dem ersten Sauerstoffkonzentrationssensor (31) und vorne relative zu dem zweiten Sauerstoffkonzentrationssensor (32) in der Fahrzeug-Vorder-Rück-Richtung (F-Re) angeordnet ist.

11. Das Spreiz-Sitz-Fahrzeug (50) gemäß Anspruch 10, wobei:
die Abgasleitung (10) eine erste Leitung (41), die mit einem Auslassanschluss (41o) ausgebildet ist, und eine zweite Leitung (42), die mit einem Einlassanschluss (42i), der mit dem Auslassanschluss (41o) verbunden ist, enthält;
ein Innendurchmesser (d42) der zweiten Leitung (42) größer ist als ein Innendurchmesser (d41) der ersten Leitung (41); und
der erste Sauerstoffkonzentrationssensor (31) an der zweiten Leitung (42) angebracht ist.

12. Das Spreiz-Sitz-Fahrzeug (50) gemäß Anspruch 10 oder 11, das umfasst:
einen Fahrzeugkörperrahmen (6), der den Verbrennungsmotor (4) lagert;
eine Zündkerze (7), die in den Zylinderkopf (3) eingesetzt ist, und hinter dem ersten Sauerstoffkonzentrationssensor (31) und vor dem zweiten Sauerstoffkonzentrationssensor (32) in der Fahrzeug-Vorder-Rück-Richtung (F-Re) angeordnet ist;
einen ersten Kabelbaum (61), der mit dem ersten Sauerstoffkonzentrationssensor (31) verbunden ist;
einen zweiten Kabelbaum (62), der mit dem zweiten Sauerstoffkonzentrationssensor (32) verbunden ist;
einen dritten Kabelbaum (63), der mit der Zündkerze (7) verbunden ist; und
einen Hauptkabelbaum (65), der entlang des Fahrzeugkörperrahmens (6) in der Fahrzeug-Vorder-Rück-Richtung (F-Re) angeordnet ist, wobei:
zumindest zwei des ersten Kabelbaums (61), des zweiten Kabelbaums (62) und des dritten Kabelbaums (63) zusammengebündelt sind, um ein Kabelbaumbündel (64) zu bilden; und
das Kabelbaumbündel (64) mit dem Hauptkabelbaum (65) verbunden ist.

13. Das Spreiz-Sitz-Fahrzeug (50) gemäß Anspruch 12, wobei das Kabelbaumbündel (64) den zweiten Kabelbaum (42) und den dritten Kabelbaum (43) enthält.

## Revendications

1. Véhicule à selle (50) comprenant :
un moteur à combustion interne (4) incluant un carter moteur (1), un bloc cylindre (2) relié au carter moteur (1) et une culasse (3) reliée au bloc cylindre (2),
un tuyau d'échappement (10) incluant un organe de raccordement (11) relié à la culasse (3), une partie avant (12) située à l'avant par rapport à la culasse (3) dans la direction avant arrière du véhicule (F-Re), une partie latérale (13) située sur le côté de la culasse (3) dans la direction de la largeur du véhicule (L-R), et une partie arrière (14) située à l'arrière par rapport à la culasse (3) dans la direction avant arrière du véhicule (F-Re),
un catalyseur (45) disposé à l'intérieur de la partie latérale (13) ou de la partie avant (12) du tuyau d'échappement (10), et
un support (20) incluant une partie fixe (21) qui est immobilisée sur la partie latérale (13) ou la partie avant (12) du tuyau d'échappement (10), où
l'extrémité avant (21f) de la partie fixe (21) du support (20) est située en avant par rapport à l'extrémité arrière (45b) du catalyseur (45) dans la direction avant arrière du véhicule (F-Re), et l'extrémité arrière (21b) de la partie fixe (21) du support (20) est située en arrière par rapport à l'extrémité avant (45f) du catalyseur (45) dans la direction avant arrière du véhicule (F-Re), et
le support (20) est soutenu directement sur le moteur à combustion interne (4).

2. Véhicule à selle (50) selon la revendication 1, dans lequel :
un premier alésage (4H) est formé dans le moteur à combustion interne (4),
un second alésage (22) est formé dans le support, et
le véhicule à selle (50) inclut un boulon (5) inséré au travers du premier alésage (4H) et du second alésage (22) pour immobiliser le support (20) sur le moteur à combustion interne (4).

3. Véhicule à selle (50) selon la revendication 2, dans lequel le premier alésage (4H) est formé dans la culasse (3) .

4. Véhicule à selle (50) selon la revendication 2 ou la revendication 3, dans lequel :
le premier alésage (4H) comporte une ouverture faisant face sur le côté dans la direction de la largeur du véhicule (L-R),
le support (20) inclut une plaque verticale (23) s'étendant vers le haut dans la direction haut bas du véhicule (U-D), et
le second alésage (22) est formé dans la plaque verticale (23) et comporte une ouverture faisant face sur le côté dans la direction de la largeur du véhicule (L-R).

5. Véhicule à selle (50) selon la revendication 4, dans lequel la plaque verticale (23) est disposée vers l'intérieur dans la direction de la largeur du véhicule (L-R) par rapport à l'axe central (13c) de la partie latérale (13) du tuyau d'échappement (10).

6. Véhicule à selle (50) selon la revendication 4 ou la revendication 5, dans lequel la plaque verticale (23) est disposée vers le haut par rapport à l'axe central (13c) du tuyau d'échappement (10) dans la direction haut bas du véhicule (U-D).

7. Véhicule à selle (50) selon l'une quelconque des revendications 1 à 6, dans lequel le support (20) inclut un chevauchement (20k) qui chevauche la culasse (3) lorsque l'on regarde le véhicule depuis le côté.

8. Véhicule à selle (50) selon l'une quelconque des revendications 1 à 7, dans lequel le catalyseur (45) inclut un chevauchement (45k) qui chevauche le bloc cylindre (2) lorsque l'on regarde le véhicule depuis le côté.

9. Véhicule à selle (50) selon l'une quelconque des revendications 1 à 8, dans lequel au moins une fraction de la partie latérale (13) du tuyau d'échappement (10) est située vers l'intérieur dans la direction de la largeur du véhicule (L-R) par rapport à l'extrémité externe (1a) du carter moteur (1) dans la direction de la largeur du véhicule (L-R).

10. Véhicule à selle (50) selon l'une quelconque des revendications 1 à 9, comprenant :
un premier capteur de concentration d'oxygène (31) fixé au tuyau d'échappement (10) et disposé en avant par rapport au catalyseur (45) dans la direction avant arrière du véhicule (F-Re), et
un second capteur de concentration d'oxygène (32) fixé au tuyau d'échappement (10) et disposé en arrière par rapport au catalyseur (45) dans la direction avant arrière du véhicule (F-Re),
dans lequel :
le premier capteur de concentration d'oxygène (31) est disposé en avant par rapport à l'extrémité arrière (3b) de la culasse (3) dans la direction avant arrière du véhicule (F-Re), et
la partie fixe (21) du support (20) est disposée par rapport au premier capteur de concentration d'oxygène (31) et en avant par rapport au second capteur de concentration d'oxygène (32) dans la direction avant arrière du véhicule (F-Re).

11. Véhicule à selle (50) selon la revendication 10, dans lequel :
le tuyau d'échappement (10) inclut un premier tuyau (41) doté d'un orifice de sortie (41o) et un second tuyau (42) doté d'un orifice d'entrée (42i) relié à l'orifice de sortie (41o),
le diamètre interne (d42) du second tuyau (42) est supérieur au diamètre interne (d41) du premier tuyau (41), et
le premier capteur de concentration d'oxygène (31) est fixé au second tuyau (42).

12. Véhicule à selle (50) selon la revendication 10 ou la revendication 11, comprenant :
un cadre de véhicule (6) supportant le moteur à combustion interne (4),
une bougie d'allumage (7) insérée dans la culasse (3) et disposée en arrière du premier capteur de concentration d'oxygène (31) et en avant du second capteur de concentration d'oxygène (32) dans la direction avant arrière du véhicule (F-Re),
un premier faisceau de câbles (61) relié au premier capteur de concentration d'oxygène (31),
un deuxième faisceau de câbles (62) relié au second capteur de concentration d'hydrogène (32),
un troisième faisceau de câbles (63) relié à la bougie d'allumage (7), et
un faisceau principal (65) disposé le long du cadre du véhicule (6) dans la direction avant arrière du véhicule (F-Re), dans lequel :
au moins deux du premier faisceau de câbles (62), du deuxième faisceau de câbles (62) et du troisième faisceau de câbles (63) sont regroupés pour former un ensemble de faisceaux (64), et
l'ensemble de faisceaux (64) est relié au faisceau principal (65).

13. Véhicule à selle (50) selon la revendication 12, dans lequel l'ensemble de faisceaux (64) inclut le deuxième faisceau de câbles (42) et le troisième faisceau de câbles (43) .
